# EUROPEAN PATENT SPECIFICATION

(11) **EP 2 658 800 B1**
(45) Date of publication and mention of the grant of the patent: **19.11.2014**
(21) Application number: 11793342.4
(22) Date of filing: 08.12.2011
(51) Int. Cl.: B65G 47/14

(54) **FEEDING APPARATUS FOR UNORIENTED OBJECTS**
ZUFÜHRVORRICHTUNG FÜR RICHTUNGSLOSE OBJEKTE
APPAREIL D'ALIMENTATION DESTINÉ À DES OBJETS NON ORIENTÉS

(30) Priority: 29.12.2010 EP 10016174
(43) Date of publication of application: 06.11.2013
(73) Proprietor: Philip Morris Products S.A., 2000 Neuchâtel (CH)
(72) Inventor: FERRAZZIN, Diego, I-41013 Castelfranco Emilia Modena (IT); PAGNONI, Michele, I-40017 San Giovanni in Persiceto (IT); RISSO, Luca, I-16121 Genova (IT)
(74) Representative: Grünecker, Kinkeldey, Stockmair & Schwanhäusser
(86) International application number: PCT/EP2011/006191
(87) International publication number: WO 2012/089303

(56) References cited:
- EP-A1- 1 642 852
- EP-A1- 1 741 350
- GB-A- 2 244 481
- US-B1- 6 234 298

## Description

The present invention relates to a feeding apparatus for objects according to the preamble of claim 1 as known from US-B-6 234 298.

The objects are, for example, functional elements of filters for smoking articles such as for example cigarettes.

In the prior art, a variety of filter elements for smoking articles are known. Typically, these filter elements are combined with filter material, to form the filter of a smoking article.

The object of the present invention is to provide a feeding apparatus, that may receive unoriented objects, and that orients and conveys these objects at a high output rate and in a flawless manner.

This is achieved by a feeding apparatus according to the appended claim 1. The cone-like portion enables changing the orientation of the objects in the hopper during the movement of the collecting means. The orientation is changed by the inclined outer surface of the cone-like portion when it comes into contact with the objects in the hopper during the movement of the collecting means. Preferably, the central axis of the cone-like portion is parallel to the moving direction of the collecting means. Preferably, the cone-like portion is arranged centrally on the collecting means. The cone-like portion may have a flat tip. Preferably, the cone-like portion is a substantially conical end portion of an otherwise substantially cylindrically formed collecting means. Preferably, there are between about 3 to about 40 collecting holes in the plurality of collecting holes, more preferably between about 15 and about 25 collecting holes, and most preferably about 20 collecting holes. The collecting holes are arranged at the lower end of the cone-like portion and are preferably extending parallel to the longitudinal axis, respectively movement axis, of the cylindrical collecting means. Preferably, the collecting holes are vertical holes. Preferably, the collecting holes are arranged in a flat upper part of the collecting means at the outer circumference of the base of the cone-like portion in an even distribution. Alternatively, the collecting holes may be provided in the cone-like portion, preferably at the lower end of the cone-like portion. Further, the collecting holes may be slightly tapered at their upper ends to more easily receive the objects.The hopper and the collecting means are adapted such that the relative movement of the collecting means with respect to the hopper enables changing the orientation of the objects in the hopper, such that the objects are receivable in the collecting hole. Preferably, the hopper opening is at the lower end of the hopper, such that the objects in the hopper are moving towards the hole by means of gravitational forces. Typically, a non-spherical object, like for example a cylindrical object, requires a certain orientation to be able to enter into the collecting hole. The relative motion of the collecting means with respect to the hopper allows not only to facilitate the movement of the objects in the direction of the collecting hole, but also helps to reorient the objects arbitrarily, such that at least some of the objects are in an orientation that allows them to be received by the collecting hole. Particularly, the collecting hole may have a cross-section, which corresponds to the cross-section of the object in one direction, wherein the cross-section of the collecting hole is slightly larger than said cross-section of the object. In particular, it is between about 1 percent and about 15 percent larger, preferably, between about 2 percent and about 5 percent. Thus, the collecting hole may enable orienting the objects from a completely random orientation to a more oriented state. For the aforementioned cylindrical object, only two orientations are possible within the collecting hole, a first orientation and a second orientation where the object is aligned parallel to an object in the first orientation but into an opposite direction. Where the cylindrical object is symmetrical along its longitudinal axis, there is no difference between the object in the first orientation and the second orientation. Thus, the feeding apparatus, allows for quickly orienting objects in a fail-safe manner and provide them with a pre-defined orientation to a further conveying means or the like. Thus, it can be used as a hopper in an assembly line, into which the objects may be fed from containers or bags.

In a preferred embodiment, the collecting hole and the collecting channel are adapted to receive objects that are substantially cylindrical with a diameter that is smaller than the axial length of the objects. Each collecting hole has a diameter that is at least slightly larger than the diameter of the objects, but smaller than the axial length of the objects. In case the object is a cylindrical object, that has a length that is larger than its diameter, the collecting hole preferably has a circular cross-section, which is slightly larger than the diameter of the cylindrical object, such that the cylindrical object fits only lengthwise in the collecting hole. The diameter of the objects is preferably at least about 5 percent, more preferably about 20 percent smaller than the axial length of the objects. The diameter of the collecting hole is preferably between about 1 percent and about 15 percent larger than the diameter of the objects, more preferably between about 2 percent and about 5 percent larger. Preferably, the collecting hole has a diameter that is at least about 5 percent smaller than the axial length of the objects, more preferably at least about 10 percent smaller. Thus, it can be ensured that the objects will be received in the collecting holes with their longitudinal axis being aligned to the normal axis of the collecting hole and the first section of the collecting channel.

Preferably, at least the portion of the hopper close to the hopper opening has a funnel-like shape. The funnel-like shape enables guiding objects toward the collecting holes. In one embodiment the entire hopper can have a funnel-like shape, such that all objects in the hopper are moved by gravitational forces towards the hopper opening at the lower end of the hopper.

Preferably, the collecting means is adapted to execute a substantially vertical reciprocating movement within the hopper opening. The relative movement between the collecting means and the hopper is, in particular, enabled by a cylindrical form of the collecting means. Preferably, the diameter of the collecting means is adapted to the diameter of the hopper opening. In particular, the hopper opening is slightly larger than the diameter of the collecting means to allow the movement. Preferably, the collecting means is in a snug fit with the hopper opening, and may be guided during this movement by the hopper opening. Preferably, the collecting means is driven by a mechanical transmission driven by a motor. Preferably, the vertical movement is of a greater scale than the length of the objects.

The feeding apparatus optionaly further comprises at least one transfer channel. Preferably, the collecting means is adapted to execute a stepwise rotational motion around the vertical axis in the hopper opening such that the collecting channel is aligned with the at least one transfer channel in at least one rotational position of the collecting means. When the transfer channel is aligned with the collecting channel, the objects are transferable from the collecting channel to the transfer channel. Preferably, the collecting channel and the first portion of the transfer channel are extending substantially vertical. Preferably, the transfer channel and the collecting channel comprise the same diameter. Preferably, air flow nozzles are provided to supply pressurized air into the collecting channel or into the transfer channel or both, to move the objects or support the movement of the objects. The transfer channel is preferably provided in a part of the machine that is stationary, while the collecting channel carries out a rotational motion together with the collecting means. Preferably, in addition, the collecting channel performs an overlying vertical reciprocating movement. Where there is a plurality of collecting holes provided in the collecting means, a plurality of respective collecting channels is provided in the collecting means. At the end of each step of the rotational motion, one of the collecting channels is aligned with the transfer channel. Thus, in this embodiment the number of steps of the stepwise rotational motion corresponds to the number of collecting channels. Preferably only one transfer channel is provided. However, in some embodiments several transfer channels may be provided. Preferably, the number of transfer channels is an integer fraction of the number of collecting channels.

In one embodiment, the collecting channels are provided with holding means. The holding means allow for maintaining the objects in the collecting channel. Preferably, the holding means are adapted to be released when the collecting channel is aligned with the transfer channel, such that the objects are receivable by the transfer channel. Preferably, the holding means are arranged at the lower end of the collecting channel, such that a plurality of objects can be collected in the collecting channel. Preferably, in between about 5 and about 25 objects can be collected in the collecting channel, more preferably about 20 objects. Preferably, when the holding means are released, the objects collected in the collecting channel move by gravitational forces or by means of pressurized air or both gravitational forces and pressurized air, or by other means into the transfer channel. Preferably, a closing means is provided in the upper portion of the collecting channel. The closing means may prevent objects from entering the collecting channel when the closing means is in the closed position. Preferably, the closing means is adapted such that it is closed when the holding means is opened, and such that the closing means is opened when the holding means is closed. Thus, it can be prevented that objects directly pass from the hopper through the collecting hole and collecting channel into the transfer channel, when the holding means is opened. In this configuration, only the objects in the collecting channel below the closing means may pass the opened holding means, while the objects above the closed closing means are retained by the holding means. Preferably, the closing means and the holding means each are provided with a separate actuator. However, preferably the holding means and closing means are mechanically connected. In particular, the holding means and closing means are slidable plates, which extend into the collecting channel and which are connected to opposite end portions of a lever. The lever forms part of the holding means and closing means. Thus, the movement of the holding means is mechanically coupled to the movement of the closing means. In one embodiment a spring is provided on the lever, such that the holding means is forced into the closed position and the closing means is forced into the open position. By applying a force on a portion of the lever next to the closing means, the lever can be moved against the force of the spring and the holding means is opened and the closing means is closed.

Preferably, the feeding apparatus comprises an alignment means. The alignment means is adapted to engage with the collecting means in its lowered position, such that the collecting channel and the transfer channel are aligned. Preferably, the feeding apparatus is provided with an engagement means. The engagement means is adapted to engage with the holding means to release the holding means. Preferably, the alignment means is a protrusion, such as a pin, which is fixed stationarily to the feeding apparatus and that engages with recesses provided on the collecting means. Preferably, the recesses on the collecting means are assigned to the individual collecting channels, such that when the alignment means engages with the collecting means, the collecting channel assigned to the alignment means is aligned with the transfer channel. Preferably, the recesses are provided circumferentially on the collecting means.

In another embodiment, the alignment means may be recesses that are provided stationary on the feeding apparatus. Preferably, the collecting means comprises a protrusion, such as a pin, which engages with the recesses.

Preferably, the engagement means that is adapted to engage with the holding means is a stationary part that engages with the holding means of the respective collecting channel, when the collecting channel is in alignment with the transfer channel. Preferably, the engaging means contacts the lever of the holding means. Preferably, the engagement means is a contact surface, for example a cam surface that is in contact with a roller on the lever of the holding means. Preferably, the closing means is connected to the lever of the holding means and is also actuated by the engagement means to close the collecting channel. Alternatively, different engagement means may be provided for the closing means and for the holding means. When several collecting channels are provided, each of the collecting channels comprising holding means or closing means or both holding means and closing means, one engagement means may be sufficient for all collecting channels that only actuates these means which are over the transfer channel.

Preferably, air flow nozzles are provided, which are adapted to enable quick transportation of the objects in the collecting channel and the transfer channel or in both channels. The power of the air flow nozzles that are provided in the collecting channels may be selected such that it is sufficient to also transport objects in the transfer channel. The airflow nozzles are preferably provided with pressurized air up to about 6 bar, preferably, between about 2 and about 5 bar.

Preferably, a reservoir is provided downstream of the wheel, wherein the reservoir is adapted to store the objects of different orientations in different chambers. The reservoir has the benefit of storing objects, such that downstream stations can be provided with oriented objects, even if the feeding apparatus has to be stopped for maintenance or due to other reasons.

Particularly, the objects in the feeding apparatus are filter elements for the manufacturing of smoking articles and are provided to a conveyance means in alternating orientations downstream of the reservoir.

Preferably, the feeding apparatus is adapted to provide about 8000 objects per minute, about 4000 objects per minute in each orientation, The split between objects in the first orientation and objects in the second orientation may be subject to standard statistical deviation.

The invention also relates to a filter maker, particularly for the manufacture of smoking articles, wherein the filter maker comprises a feeding apparatus according to the invention as described above.

The invention also relates to a method of orienting unoriented objects in a feeding apparatus comprising the steps of providing a hopper receiving objects in random orientations, wherein the hopper has a hopper opening at its lower end, providing a collecting means with an outer shape corresponding to the hopper opening and that is movable in the opening of the hopper, the collecting means further comprising a cone-like portion at its upper end and a plurality of collecting channels for collecting the received objects, wherein the collecting channels are connected to collecting holes, respectively, the collecting holes being provided at the lower end of the cone-like portion, filling the hopper with unoriented objects in random orientations, moving the collecting means in a reciprocating manner within the hopper and changing the orientation of the unoriented objects in the hopper by the reciprocating movement such that objects are received in the collecting holes such that the objects are oriented within the collecting channels.

The invention will be further described, by way of example only, with reference to the accompanying drawings in which:
Figure 1 shows a sectional side view of the feeding apparatus according to an embodiment of the invention;
Figure 2 shows a perspective view of the hopper and the collecting means of a feeding apparatus according to an embodiment of the invention;

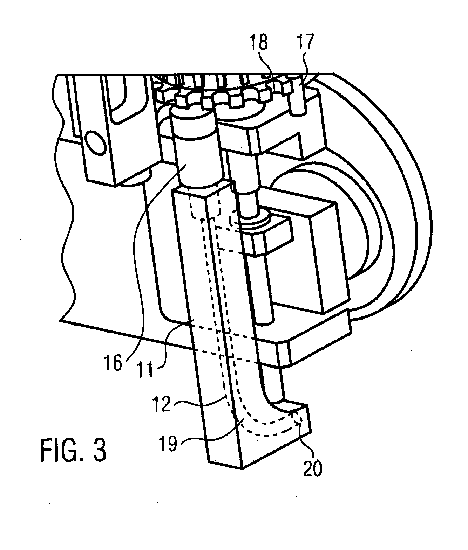

Figure 3 shows a magnified perspective view of the transfer channel in the feeding apparatus according to the embodiment of the invention;

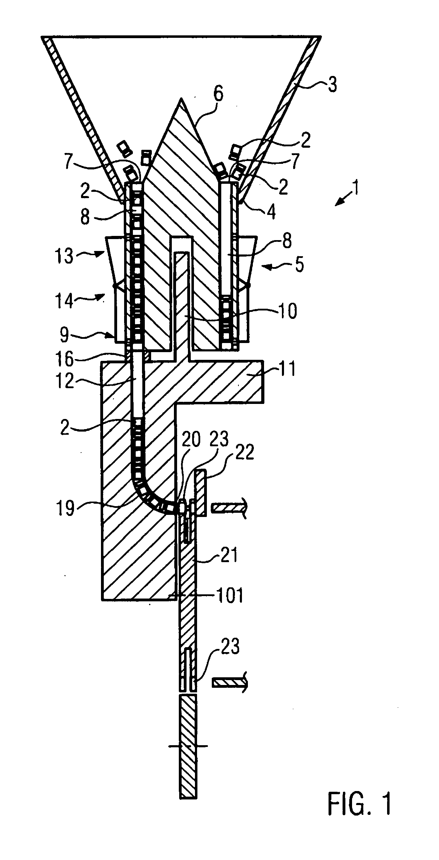

Figure 1 shows a feeding apparatus 1 for objects 2 according to an embodiment of the present invention. At its uppermost end, the feeding apparatus 1 comprises a hopper 3 as a hopper for the arbitrarily arranged objects 2. The hopper 3 generally has a funnel-like shape which terminates at its lower end at a hopper opening 4. The hopper opening 4 has a circular cross-section and receives a partially cylindrical collecting means 5, which is arranged moveably in the vertical direction in the hopper opening 4. The hopper 3 is arranged stationary, while the collecting means 5 is arranged to be moveable in the vertical direction. The collecting means 5 comprises at its upper end a cone-like portion 6 which protrudes into the hopper 3. At the lower end of the cone-like portion 6 several collecting holes 7 are provided. The collecting holes 7 are arranged directly adjacent to the cone-like portion 6 and are open into a vertical upright direction to receive the objects 2. In particular the cone-like portion 6 facilitates that objects 2 are received by the collecting holes 7. Thus, during operation the collecting means 5 is moved vertically in a reciprocating manner, such that the objects in the hopper 3 are rearranged by means of the relative movement of collecting means 5 with respect to the hopper 3. The funnel-like shape of the hopper 3 and the cone-like portion 6 of the collecting means 5 facilitate the movement of the objects towards the collecting holes 7, such that the objects are received by the collecting holes 7. In the lowest point of the reciprocating movement of the collecting means 5, the collecting holes 7 are arranged at the height of the hopper opening 4.

The objects 2 have a generally cylindrical shape with a longitudinal axis extending centrally and in parallel to the nappe of the objects 2. The collecting holes 7 have a generally circular shape with a diameter slightly larger than the diameter of the objects but smaller than the longitudinal length of the objects. Thus, the objects 2 can only be received in two orientations in the collecting holes 7.

Beneath each collecting hole 7 a collecting channel 8 is provided which extends substantially in the vertical direction throughout the collecting means 5 and is open at the lower end of the collecting means 5. The objects 2 that are received in the collecting holes 7 are transported by gravitational forces through the collecting channels 8 until they are stopped at a lower end of the collecting channels 8 by a holding means 9 or by further objects 2 which are already held by the holding means 9. The collecting channel 8 has substantially the same diameter as the collecting hole, and thus the objects 2 will be collected in the collecting channel 8 longitudinally aligned with respect to each other.

The collecting means 5 executes a vertical movement in combination with a rotational movement around a vertical axis 10 which is provided stationary on the transfer portion 11 of the feeding apparatus 1. Preferably, the collecting means 5 comprises twenty collecting holes 7 and twenty collecting channels 8. During a combined vertical and rotational motion with a reciprocating vertical displacement of about 20mm and a rotation angle of 18 degrees, one or more objects 2 may be received in each of the collecting holes. Thus, after twenty combined vertical and rotational motions of the collecting means 5, the collecting channel 8 is arranged in the position as shown on the left side of the collecting means 5 in Fig. 1. It is to be understood that statistically not each combined vertical and rotational motion allows for the receipt of one object 2 in each of the collecting holes 7, however, generally at least about twelve to about fifteen objects 2 are collected during one full rotation.

Thus, when the collecting channel 8 is in the position as shown on the left side of the collecting means 5 in Fig. 1, it is aligned with a transfer channel 12. When the holding means 9 is opened such that it retracts from the collecting channel 8, the objects 2 in the collecting channel 8 are moved by means of gravity into the transfer channel 12. Additionally, airflow nozzles may be provided in the collecting channel 8 or transfer channel 12 to facilitate the movement of the objects 2 by an air current.

Furthermore, a closing means 13 is provided, which enables the closing of the upper section of the collecting channel 8 when the holding means 9 is opened, such that only the objects 2 below the closing means 13 are transferred to the transfer channel 12. This allows that only a predetermined number of objects 2, respectively not more than a certain number of objects 2, are transferred to the transfer channel 12.

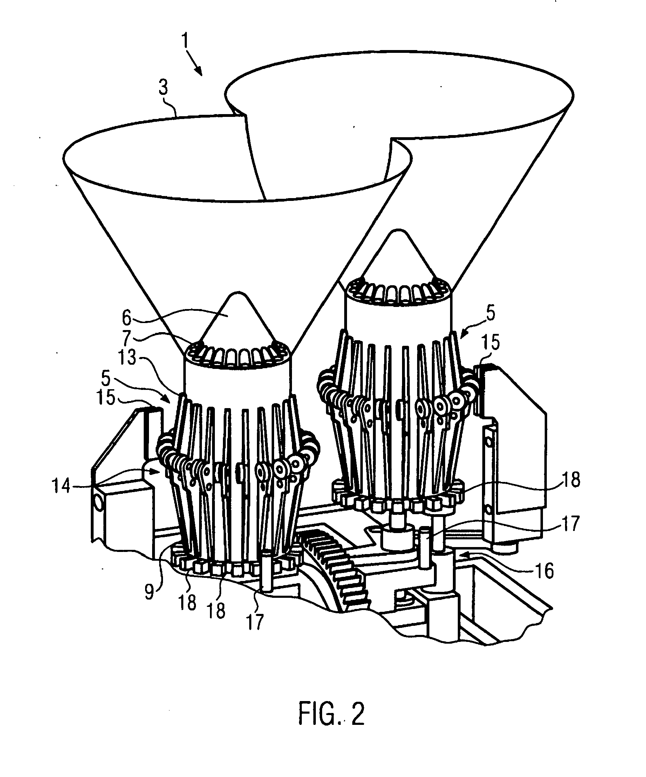

Both the holding means 9 and the closing means 13 are plates which extend through slots in the collecting means 5 into the collecting channel 8. The plates of the holding means 9 and closing means 13 are hingedly connected to a lever 14 which is levered between the holding means 9 and closing means 13. Thus, when the lever 14 is rotated in a direction such that the holding means 9 is withdrawn from the collecting channel 8, the closing means 13 is at the same time inserted in the collecting channel 8. A stationary contact means 15 (see Fig. 2) is adapted to contact the lever 14 of the holding means 9 of the collecting channel 8 which is aligned with the transfer channel 12. The lever 14 will automatically come into contact with the contact means 15 due to the rotational and vertical motion of the collecting means 5.

In between the collecting channel 8 and the transfer channel 12, a telescopic guide 16 is provided, which extends and retracts with the vertical movement of the collecting means 5, but remains stationary over the transfer channel 12. The telescopic guide 16 enables the guiding of objects 2 from the collecting channel 8 into the transfer channel 12. The telescopic guide 16 is fixed to the transfer portion 11 above the transfer channel 12 and slidable engages the lower surface of the collecting means 5 under the collecting channel 8. In particular, a spring force may ensure that the telescopic guide 16 remains in contact with the lower surface of the collecting means 5.

Fig. 2 shows a second embodiment of the invention, comprising two hoppers 3, wherein one collecting means 5 is provided at the bottom of the funnel-like sections of each hopper 3. Each collecting means 5 comprises 20 collecting holes 7 and collecting channels 8, into each of which 20 objects 2 may be received. The reciprocating vertical displacement of the collecting means 5 is 20mm, and with each reciprocating movement a rotational movement of 18 degrees is carried out. The descending vertical movement of the collecting means 5 is carried out without any rotation. In between the holding means 9 and closing means 13 about twelve objects 2 are received through the collecting holes 7 and are transferred together to the transfer channel 12. A brushless motor is used to drive the collecting means 5 via a mechanical transmission comprising cams.

Furthermore, an alignment means 17 in the form of a pin is provided on the transfer portion 11 (see Fig. 2). The alignment means 17 is adapted to engage with recesses 18, which are provided around the lower circumference of the collecting means 5. As each recess 18 is assigned to one of the collecting channels 8, it is enabled that the alignment means 17 together with the recesses 18 allow to align the respective collecting channel 8 with the transfer channel 12. When the collecting means 5 is in its lifted position, the alignment means 17 is not in engagement with the recess 18 such that the collecting means 5 can rotate around the axis 10. When it is subsequently lowered, the next recess 18 will be in engagement with the alignment means 17.

The objects 2 in the transfer channel 12 are moved towards the lower end of the transfer channel 12 by means of gravitational forces or airflow nozzles or both gravitational forces and airflow nozzles. The lower portion of the transfer channel 12 comprises a bent portion 19, wherein the transfer channel 12 changes its extension from a substantially vertical extension to a substantially horizontal extension. The transfer channel 12 terminates at a lower transfer channel opening 20 at the side of the transfer portion 11. Next to the lower transfer channel opening 20, a first wheel 21 is provided around a rotational axis 101 which is substantially horizontal and parallel to the horizontal extension direction of the last part of the transfer channel 12. At the other side of the first wheel 21 as seen in an axial direction from the lower transfer channel opening 20 a stationary abutment plate 22 is provided.

The objects 2 received in the transfer channel 12 will be further conveyed on the upper circumference of the first wheel 21 in a receiving sector 23, as soon as the receiving sector 23 is aligned with the lower transfer channel opening 20. The receiving sector 23 is a recess in the outer circumferential portion of the first wheel 21.

The objects 2 are collected by further conveyance means and are provided to a reservoir, which stores the objects 2 of different orientations in different buffers. From the different buffers of the reservoirs, the objects can be provided to further downstream manufacturing stations, in particular downstream manufacturing stations of a manufacturing line of smoking articles. The objects 2 may be used as filter elements for smoking articles, which are provided together with filter material in the smoking article. In between the first wheel and reservoir several idle wheels for the transport of objects may be provided in some embodiments.

## Claims

1. Feeding apparatus (1) for objects (2), comprising:
a hopper (3) for receiving objects (2) in random orientations, wherein the hopper (3) has a hopper opening (4) at its lower end, and
a collecting means (5) that is movable in the opening (4) of the hopper (3),
wherein the collecting means (5) comprises at least one collecting hole (7) that is adapted to receive objects (2) in a specific orientation,
and wherein the collecting means (5) further comprises at least one collecting channel (8) for collecting the received objects (2) that is connected to the at least one collecting hole (7);
wherein the hopper (3) and the collecting means (5) are adapted such that the relative movement of the collecting means (5) with respect to the hopper (3) enables to change the orientation of the objects (2) in the hopper (3) such that objects (2) are receivable in the collecting hole (7) that is connected to the at least one collecting channel (8), **characterized in that** the collecting means (5) comprises a cone-like portion (6) at its upper end, and a plurality of collecting holes (7) are provided at the lower end of the cone-like portion (6).

2. Feeding apparatus according to claim 1, wherein the collecting hole (7) and the collecting channel (8) are adapted to receive objects (2) which are substantially cylindrical having a diameter which is smaller than the axial length of the objects (2), wherein each collecting hole (7) has a diameter which is slightly larger than the diameter of the objects (2) but smaller than the axial length of the objects (2).

3. Feeding apparatus according to any one of the previous claims, wherein the collecting means (5) is adapted to execute a substantially vertical reciprocating movement in the hopper opening (4).

4. Feeding apparatus according to any one of the previous claims, further comprising at least one transfer channel (12), wherein the collecting means (5) is adapted to execute a stepwise rotational motion around the vertical axis (10) in the hopper opening (4), and wherein the collecting channel (8) is aligned with the at least one transfer channel (12) in at least one rotational position of the collecting means (5).

5. Feeding apparatus according to claim 4, wherein the collecting channels (8) are provided with holding means (9) which allow maintaining the objects (2) in the collecting channel (8), wherein the holding means (9) are adapted to be released when the collecting channel (8) is aligned with the transfer channel (12), such that the objects (2) are receivable by the transfer channel (12).

6. Feeding apparatus according to claim 5, further comprising an alignment means (17), which is adapted to engage with the collecting means (5) in its lowered position, such that the collecting channel (8) and the transfer channel (12) are aligned, and an engagement means which is adapted to engage with the holding means (9) to release the holding means (9).

7. Feeding apparatus according to any one of the claims 4 to 6, wherein airflow nozzles are provided which are adapted to provide an air flow to enable transportation of the objects (2) in the collecting channel (8) and the transfer channel (12).

8. Feeding apparatus according to any one of the previous claims, wherein the objects (2) are filter elements for the manufacturing of smoking articles and are provided to a conveyance means in alternating orientations downstream.

9. Filter maker comprising a feeding apparatus according to any one of the previous claims.

10. Method of orienting unoriented objects (2) in a feeding apparatus (1) comprising the steps of:
- providing a hopper (3) receiving objects (2) in random orientations, wherein the hopper (3) has a hopper opening (4) at its lower end,
- providing a collecting means (5) with an outer shape corresponding to the hopper opening (4) and that is movable in the opening (4) of the hopper (3), the collecting means (5) further comprising a cone-like portion (6) at its upper end, a plurality of collecting channels (8) for collecting the received objects (2), wherein the collecting channels (8) are connected to collecting holes (7), respectively, the collecting holes (3) being provided at the lower-end of the cone-like portion (6),
- filling the hopper (4) with unoriented objects (2) in random orientations,
- moving the collecting means (5) in a reciprocating manner within the hopper (3), and
- changing the orientation of the unoriented objects (2) in the hopper (3) by the reciprocating movement such that objects (2) are received in the collecting holes (7) such that the objects (2) are oriented within the collecting channels (8).

## Patentansprüche

1. Zuführvorrichtung (1) für Objekte (2), umfassend:
einen Trichter (3) zum Aufnehmen der Objekte (2) in zufälligen Ausrichtungen, wobei der Trichter (3) eine Trichteröffnung (4) an seinem unteren Ende hat, und
eine Sammeleinrichtung (5), die in der Öffnung (4) des Trichters (3) beweglich ist,
wobei die Sammeleinrichtung (5) wenigstens ein Sammelloch (7) hat, das dazu eingerichtet ist, Objekte (2) in einer speziellen Ausrichtung aufzunehmen,
und die Sammeleinrichtung (5) weiterhin wenigstens einen Sammelkanal (8) zum Sammeln der aufgenommenen Objekte (2) umfasst, der mit dem wenigstens einen Sammelloch (7) verbunden ist;
wobei der Trichter (3) und die Sammeleinrichtung (5) derart eingerichtet sind, dass die Relativbewegung der Sammeleinrichtung (5) in Bezug auf den Trichter (3) eine Änderung der Ausrichtung der Objekte (2) in dem Trichter (3) ermöglicht, so dass die Objekte (2) in dem Sammelloch (7) aufgenommen werden können, das mit dem wenigstens einen Sammelkanal (8) verbunden ist,
**dadurch gekennzeichnet, dass** die Sammeleinrichtung (5) einen konusartigen Abschnitt (6) an ihrem oberen Ende umfasst und eine Vielzahl von Sammellöchern (7) an dem unteren Ende des konusartigen Abschnittes (6) vorgesehen sind.

2. Zuführvorrichtung nach Anspruch 1, bei der das Sammelloch (7) und der Sammelkanal (8) dazu eingerichtet sind, Objekte (2) aufzunehmen, die im wesentlichen zylindrisch sind und einen Durchmesser haben, der geringer als die axiale Länge der Objekte (2) ist, wobei jedes Sammelloch (7) einen Durchmesser aufweist, der geringfügig größer ist als der Durchmesser der Objekte (2), jedoch geringer ist als die axiale Länge der Objekte (2).

3. Zuführvorrichtung nach einem der vorhergehenden Ansprüche, bei der die Sammeleinrichtung (5) dazu eingerichtet ist, eine im wesentlichen vertikale Auf- und Abbewegung in der Trichteröffnung (4) auszuführen.

4. Zuführvorrichtung nach einem der vorhergehenden Ansprüche, weiterhin umfassend wenigstens einen Übergabekanal (12), wobei die Sammeleinrichtung (5) dazu eingerichtet ist, eine schrittweise Drehbewegung um die vertikale Achse (10) in der Trichteröffnung (4) auszuführen, und der Sammelkanal (8) mit dem wenigstens einen Übergabekanal (12) in - wenigstens einer Drehstellung der Sammeleinrichtung (5) ausgerichtet ist.

5. Zuführvorrichtung nach Anspruch 4, bei der die Sammelkanäle (8) mit Halteeinrichtungen (9) versehen sind, die ein Halten der Objekte (2) in dem Sammelkanal (8) gestatten, wobei die Halteeinrichtungen dazu eingerichtet sind gelöst zu werden, wenn der Sammelkanal (8) mit dem Übergabekanal (12) ausgerichtet ist, so dass die Objekte (2) von dem Übergabekanal (12) aufgenommen werden können.

6. Zuführvorrichtung nach Anspruch 5, weiterhin umfassend eine Ausrichteinrichtung (17), die dazu eingerichtet ist, mit der Sammeleinrichtung (5) in ihrer abgesenkten Stellung in Eingriff zu gelangen, so dass der Sammelkanal (8) und der Transferkanal (12) ausgerichtet sind, und eine Eingreifeinrichtung, die dazu eingerichtet ist, mit der Halteeinrichtung (9) in Eingriff zu gelangen, um die Halteeinrichtung (9) zu lösen.

7. Zuführvorrichtung nach einem der Ansprüche 4 bis 6, bei der Luftstromdüsen vorgesehen sind, die dazu eingerichtet sind, einen Luftstrom bereitzustellen, um einen Transport der Objekte (2) in dem Sammelkanal (8) und dem Übergabekanal (12) zu ermöglichen.

8. Zuführvorrichtung nach einem der vorhergehenden Ansprüche, bei der die Objekte (2) Filterelemente für die Herstellung von Rauchwaren sind und einer Fördereinrichtung in alternierenden Ausrichtungen stromabwärts bereitgestellt werden.

9. Filterherstellungseinrichtung, umfassend eine Zuführvorrichtung nach einem der vorhergehenden Ansprüche.

10. Verfahren zum Ausrichten unausgerichteter Objekte (2) in einer Zuführvorrichtung (1), umfassend folgende Schritte:
- Bereitstellen eines Trichters (3), der Objekte (2) in zufälligen Ausrichtungen aufnimmt, wobei der Trichter (3) eine Trichteröffnung (4) an seinem unteren Ende hat,
- Bereitstellen einer Sammeleinrichtung (5) mit einer Außenform, die der Trichteröffnung (4) entspricht und in der Öffnung (4) des Trichters (3) beweglich ist, wobei die Sammeleinrichtung (5) weiterhin einen konusartigen Abschnitt (6) an ihrem oberen Ende und eine Vielzahl von Sammelkanälen (8) zum Sammeln der aufgenommenen Objekte (2) umfasst, wobei die Sammelkanäle (8) jeweils mit Sammellöchern (7) verbunden sind und die Sammellöcher (7) an dem unteren Ende des konusartigen Abschnittes (6) vorgesehen sind,
- Befüllen des Trichters (4) mit unausgerichteten Objekten (2) in zufälligen Ausrichtungen,
- Auf- und Abbewegen der Sammeleinrichtung (5) innerhalb des Trichters (3) und
- Ändern der Ausrichtung der unausgerichteten Objekte (2) in dem Trichter (3) durch die Auf- und Abbewegung, so dass die Objekte (2) in den Sammellöchern (7) derart aufgenommen werden, dass die Objekte (2) innerhalb der Sammelkanäle (8) ausgerichtet sind.

## Revendications

1. Appareil d'alimentation (1) d'objets (2), comprenant :
une trémie (3) pour recevoir des objets (2) présentant des orientations aléatoires, dans lequel la trémie (3) comporte une ouverture de trémie (4) à son extrémité inférieure, et
un moyen de collecte (5) qui peut être déplacé dans l'ouverture (4) de la trémie (3),
dans lequel le moyen de collecte (5) comprend au moins un trou de collecte (7) qui est adapté pour recevoir des objets (2) dans une orientation spécifique,
et dans lequel le moyen de collecte (5) comprend en outre au moins un canal de collecte (8) pour collecter les objets reçus (2) qui est connecté audit au moins un trou de collecte (7) ;
dans lequel la trémie (3) et le moyen de collecte (5) sont adaptés de telle sorte que le déplacement relatif du moyen de collecte (5) par rapport à la trémie (3) permet de changer l'orientation des objets (2) dans la trémie (3) de telle sorte que des objets (2) peuvent être reçus dans le trou de collecte (7) qui est connecté audit au moins un canal de collecte (8),
**caractérisé en ce que**
le moyen de collecte (5) comprend une partie de forme conique (6) à son extrémité supérieure, et une pluralité de trous de collecte (7) sont pourvus à l'extrémité inférieure de la partie de forme conique (6).

2. Appareil d'alimentation selon la revendication 1, dans lequel le trou de collecte (7) et le canal de collecte (8) sont adaptés pour recevoir des objets (2) sensiblement cylindriques ayant un diamètre inférieur à la longueur axiale des objets (2), dans lequel chaque trou de collecte (7) présente un diamètre légèrement supérieur au diamètre des objets (2) mais inférieur à la longueur axiale des objets (2).

3. Appareil d'alimentation selon l'une quelconque des revendications précédentes, dans lequel le moyen de collecte (5) est adapté pour exécuter un mouvement de va-et-vient essentiellement vertical dans l'ouverture de trémie (4).

4. Appareil d'alimentation selon l'une quelconque des revendications précédentes, comprenant en outre au moins un canal de transfert (12), dans lequel le moyen de collecte (5) est adapté pour exécuter un mouvement de rotation pas à pas autour de l'axe vertical (10) dans l'ouverture de trémie (4), et dans lequel le canal de collecte (8) est aligné avec ledit au moins un canal de transfert (12) dans au moins une position de rotation du moyen de collecte (5).

5. Appareil d'alimentation selon la revendication 4, dans lequel les canaux de collecte (8) sont pourvus d'un moyen de maintien (9) qui permet de maintenir les objets (2) dans le canal de collecte (8), dans lequel le moyen de maintien (9) est adapté pour être libéré quand le canal de collecte (8) est aligné avec le canal de transfert (12), de telle sorte que les objets (2) peuvent être reçus par le canal de transfert (12).

6. Appareil d'alimentation selon la revendication 5, comprenant en outre un moyen d'alignement (17) qui est adapté pour s'engager avec le moyen de collecte (5) dans sa position abaissée de telle sorte que le canal de collecte (8) et le canal de transfert (12) sont alignés, et un moyen d'engagement qui est adapté pour s'engager avec le moyen de maintien (9) pour libérer le moyen de maintien (9).

7. Appareil d'alimentation selon l'une quelconque des revendications 4 à 6, dans lequel des buses de flux d'air sont pourvues, qui sont adaptées pour fournir un flux d'air afin de permettre le transport des objets (2) dans le canal de collecte (8) et le canal de transfert (12).

8. Appareil d'alimentation selon l'une quelconque des revendications précédentes, dans lequel les objets (2) sont des éléments de filtre pour la fabrication d'articles pour fumeurs et sont fournis à un moyen de convoyage dans des orientations alternantes en aval.

9. Dispositif de fabrication de filtres comprenant un appareil d'alimentation selon l'une quelconque des revendications précédentes.

10. Procédé d'orientation d'objets non orientés (2) dans un appareil d'alimentation (1), comprenant les étapes suivantes :
- fourniture d'une trémie (3) qui reçoit des objets (2) présentant des orientations aléatoires, dans lequel la trémie (3) comporte une ouverture de trémie (4) à son extrémité inférieure,
- fourniture d'un moyen de collecte (5) avec une forme externe correspondant à l'ouverture de trémie (4) et qui peut être déplacé dans l'ouverture (4) de la trémie (3), le moyen de collecte (5) comprenant en outre une partie de forme conique (6) à son extrémité supérieure et une pluralité de canaux de collecte (8) pour collecter les objets reçus (2), dans lequel les canaux de collecte (8) sont respectivement connectés à des trous de collecte (7), les trous de collecte (3) étant pourvus à l'extrémité inférieure de la partie de forme conique (6),
- remplissage de la trémie (4) avec des objets non orientés (2) présentant des orientations aléatoires,
- déplacement du moyen de collecte (5) selon un mouvement de va-et-vient dans la trémie (3), et
- changement de l'orientation des objets non orientés (2) dans la trémie (3) par le mouvement de va-et-vient de telle sorte que des objets (2) sont reçus dans les trous de collecte (7), moyennant quoi les objets (2) sont orientés dans les canaux de collecte (8).
